# EUROPEAN PATENT APPLICATION

(11) **EP 1 675 410 A2**
(43) Date of publication of application: **28.06.2006**
(21) Application number: 05254024.2
(22) Date of filing: 28.06.2005
(51) Int. Cl.: H04N 9/31, F21V 9/04

(54) **Method of reducing the temperature difference between upper and lower portions of a lamp bulb, optical unit, projection type display apparatus and projection television apparatus**

(30) Priority: 30.06.2004 JP 2004193802; 11.05.2005 JP 2005138884
(71) Applicant: SONY CORPORATION, Tokyo (JP)
(72) Inventor: Uno, Nahoko, Sony Corporation, Tokyo (JP); Hasegawa, Hiroshi, Sony Corporation, Tokyo (JP); Ohmura, Yukio, Sony Corporation, Tokyo (JP)
(74) Representative: Leppard, Andrew John

(57) **Abstract**

A method and apparatus is disclosed which minimizes the temperature difference between upper and lower portions of a lamp bulb in an optical unit. A UV-IR cut filter is disposed in a downwardly inclined relationship such that an upper portion thereof is nearer to a discharge lamp than a lower portion thereof so that infrared rays and ultraviolet rays included in light emitted from a lamp bulb and reflected in a forward direction from an upper portion of a reflecting face are reflected toward a lower portion of the reflecting face. As the reflected light from the UV-IR cut filter is illuminated on the lower portion of the reflecting face, the temperature difference between upper and lower portions of the lamp bulb is reduced.

## Description

The present invention relates to a method of reducing the temperature difference between upper and lower portions of a lamp bulb, optical unit, projection type display apparatus and projection television apparatus.

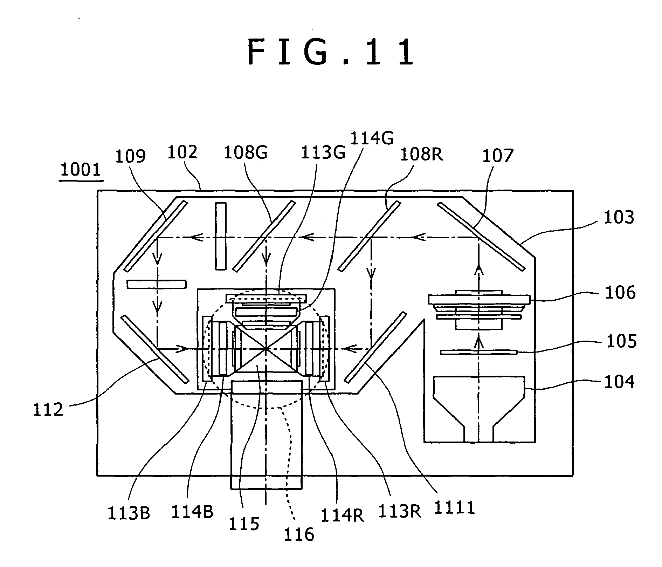

Such a liquid crystal projector as shown in FIG. 11 is known and disclosed in Japanese Patent Laid-Open No. 2001-183746. Referring to FIG. 11, the liquid crystal projector 1001 includes an optical unit 103 installed in the inside of an outer housing 102. The optical unit 103 includes a discharge lamp 104 serving as a light source, a UV-IR cut filter 105 disposed on an optical axis of the discharge lamp 104, a PS conversion apparatus 106 and a mirror 107, and dichroic mirrors 108R and 108G and a mirror 109 provided on an optical axis of light reflected by the mirror 107. The optical unit 103 further includes mirrors 1111 and 112 provided on optical axes of light reflected by the dichroic mirror 108R and the mirror 109, respectively, and condenser lenses 113R, 113G and 113B provided on the optical axes of the light reflected by the mirrors 1111, 108G and 112, respectively. The optical unit 103 further includes three spatial optical modulation elements 114R, 114G and 114B for the three primary colors of R, G and B each in the form of a transmission type liquid crystal panel or the like serving as a light modulation section, a cross prism 115 for light synthesis disposed on paths of light beams emitted from the spatial optical modulation elements 114R, 114G and 114B, and a projection lens 116 for projecting a full color image optically synthesized by the cross prism 115. An ultra-high pressure mercury lamp is used for the discharge lamp 104, and an air blower fan is used to cool around the lamp bulb of the discharge lamp 104 and the inside of a lamp reflector of the discharge lamp 104.

In the liquid crystal projector 1001 described above, air is fed through a gap called air gap provided in the lamp reflector for a discharge lamp used in a projector and so forth, and the introduction angle of a fan duct and the voltage to the fan motor are adjusted to reduce the temperature difference between upper and lower portions of the lamp bulb. According to the mechanism, however, since air is fed through the air gap to cool the lamp bulb at a distance, it is difficult to perform precise cooling control of the temperatures at the upper and lower portions of the lamp bulb. As a result, the mechanism fails to sufficiently reduce the temperature difference between the upper and lower portions of the lamp bulb.

This gives rise to such a problem that the bulb of the discharge lamp is whitened or blackened, which results in reduction of the life of the bulb.

Such a problem as just described not only occurs where a UV-IR cut filter but also occurs similarly where an IR cut filter is used.

Embodiments of the present invention seek to provide a method of reducing the temperature difference between upper and lower portions of a lamp bulb and an optical unit, a projection type display apparatus and a projection television apparatus to which the method is applied.

In embodiments of the present invention, that location of a reflecting face of a lamp reflector for a discharge lamp upon which reflected light from an IR cut filter or a UV-IR cut filter is illuminated is set specifically.

Aspects of the present invention are set out in the claims.

In particular, according to an embodiment of the present invention, there is provided a method of reducing the temperature difference between upper and lower portions of a lamp bulb of a discharge lamp disposed in a horizontal direction in an apparatus which includes, in addition to the discharge lamp an IR cut filter disposed in front of the discharge lamp. The discharge lamp includes, in addition to the lump bulb, a lamp reflector having a reflecting face disposed around the lamp bulb for reflecting light emitted from the lamp bulb and emitting the reflected light in the forward direction. The method includes a step of reflecting infrared rays included in the light emitted from the lamp bulb and reflected and emitted in the forward direction by and from the reflecting face in a rather downward direction toward the reflecting face by means of the IR cut filter.

According to another embodiment of the present invention, there is provided a method of reducing the temperature difference between upper and lower portions of a lamp bulb of a discharge lamp disposed in a downward direction in an apparatus which includes, in addition to the discharge lamp, an IR cut filter disposed in lower side of the discharge lamp. The discharge lamp includes, in addition to the lump bulb, a lamp reflector having a reflecting face disposed around the lamp bulb for reflecting light emitted from the lamp bulb and emitting the reflected light in the downward direction. The method includes a step of reflecting infrared rays included in the light emitted from the lamp bulb and reflected and emitted in the downward direction by and from the reflecting face in a direction toward an outer circumference of the reflecting face by means of the IR cut filter.

According to a further embodiment of the present invention, there is provided a method of reducing the temperature difference between upper and lower portions of a lamp bulb of a discharge lamp disposed in an upward direction in an apparatus which includes, in addition to the discharge lamp, an IR cut filter disposed in upper side of the discharge lamp. The discharge lamp includes, in addition to the lump bulb, a lamp reflector having a reflecting face disposed around the lamp bulb for reflecting light emitted from the lamp bulb and emitting the reflected light in the upward direction. The method includes a step of reflecting infrared rays included in the light emitted from the lamp bulb and reflected and emitted in the upward direction by and from the reflecting face in a direction toward an outer circumference of the reflecting face by means of the IR cut filter.

According to a still further embodiment of the present invention, there is provided a method of reducing the temperature difference between upper and lower portions of a lamp bulb of a discharge lamp disposed in a horizontal direction in an apparatus which includes, in addition to the discharge lamp, a UV-IR cut filter disposed in front of the discharge lamp. The discharge lamp includes, in addition to the lump bulb, a lamp reflector having a reflecting face disposed around the lamp bulb for reflecting light emitted from the lamp bulb and emitting the reflected light in the forward direction. The method includes a step of reflecting infrared rays included in the light emitted from the lamp bulb and reflected and emitted in the forward direction by and from the reflecting face in a rather downward direction toward the reflecting face by means of the UV-IR cut filter.

According to a yet further embodiment of the present invention, there is provided a method of reducing the temperature difference between upper and lower portions of a lamp bulb of a discharge lamp disposed in a downward direction in an apparatus which includes, in addition to the discharge lamp, a UV-IR cut filter disposed in lower side of the discharge lamp. The discharge lamp includes, in addition to the lump bulb, a lamp reflector having a reflecting face disposed around the lamp bulb for reflecting light emitted from the lamp bulb and emitting the reflected light in the downward direction. The method includes a step of reflecting infrared rays included in the light emitted from the lamp bulb and reflected and emitted in the downward direction by and from the reflecting face in a direction toward an outer circumference of the reflecting face by means of the UV-IR cut filter.

According to a yet further embodiment of the present invention, there is provided a method of reducing the temperature difference between upper and lower portions of a lamp bulb of a discharge lamp disposed in an upward direction in an apparatus which includes, in addition to the discharge lamp, a UV-IR cut filter disposed in upper side of the discharge lamp. The discharge lamp includes, in addition to the lump bulb, a lamp reflector having a reflecting face disposed around the lamp bulb for reflecting light emitted from the lamp bulb and emitting the reflected light in the upward direction. The method includes a step of reflecting infrared rays included in the light emitted from the lamp bulb and reflected and emitted in the upward direction by and from the reflecting face in a direction toward an outer circumference of the reflecting face by means of the UV-IR cut filter.

According to an additional embodiment of the present invention, there is provided an optical unit, including a discharge lamp disposed in a horizontal direction for projecting an image, and an IR cut filter disposed in front of the discharge lamp. The discharge lamp includes a lamp bulb, and a lamp reflector having a reflecting face disposed around the lamp bulb for reflecting light emitted from the lamp bulb and emitting the reflected light in the forward direction. Infrared rays included in the light emitted from the lamp bulb and reflected and emitted in the forward direction by and from the reflecting face are reflected in a rather downward direction toward the reflecting face by means of the IR cut filter.

According to another additional embodiment of the present invention, there is provided an optical unit, including a discharge lamp disposed in a horizontal direction for projecting an image, and a UV-IR cut filter disposed in front of the discharge lamp. The discharge lamp includes a lamp bulb, and a lamp reflector having a reflecting face disposed around the lamp bulb for reflecting light emitted from the lamp bulb and emitting the reflected light in the forward direction. Ultraviolet rays and infrared rays included in the light emitted from the lamp bulb and reflected and emitted in the forward direction by and from the reflecting face are reflected in a rather downward direction toward the reflecting face by means of the UV-IR cut filter.

According to a further additional embodiment of the present invention, there is provided a projection type display apparatus including an optical unit for projecting an image on a screen. The optical unit includes a discharge lamp disposed in a horizontal direction and an IR cut filter disposed in front of the discharge lamp. The discharge lamp includes a lamp bulb, and a lamp reflector having a reflecting face disposed around the lamp bulb for reflecting light emitted from the lamp bulb and emitting the reflected light in the forward direction. Infrared rays included in the light emitted from the lamp bulb and reflected and emitted in the forward direction by and from the reflecting face are reflected in a rather downward direction toward the reflecting face by means of the IR cut filter.

According to a still further additional embodiment of the present invention, there is provided a projection type display apparatus including an optical unit for projecting an image on a screen. The optical unit includes a discharge lamp disposed in a horizontal direction and a UV-IR cut filter disposed in front of the discharge lamp. The discharge lamp includes a lamp bulb, and a lamp reflector having a reflecting face disposed around the lamp bulb for reflecting light emitted from the lamp bulb and emitting the reflected light in the forward direction. Ultraviolet rays and infrared rays included in the light emitted from the lamp bulb and reflected and emitted in the forward direction by and from the reflecting face are reflected in a rather downward direction toward the reflecting face by means of the UV-IR cut filter.

According to a yet further additional embodiment of the present invention, there is provided a projection television apparatus, including a frame, a rear projection type screen attached to a front face of the frame, an optical unit provided on the frame for projecting a television image, and a reflecting mirror attached to the frame for reflecting a television image projection light flux emitted from the optical unit on a rear face of the rear projection type screen. The optical unit includes a discharge lamp disposed in a horizontal direction and an IR cut filter disposed in front of the discharge lamp. The discharge lamp includes a lamp bulb, and a lamp reflector having a reflecting face disposed around the lamp bulb for reflecting light emitted from the lamp bulb and emitting the reflected light in the forward direction. Infrared rays included in the light emitted from the lamp bulb and reflected and emitted in the forward direction by and from the reflecting face are reflected in a rather downward direction toward the reflecting face by means of the IR cut filter.

According to a yet further additional embodiment of the present invention, there is provided a projection television apparatus, including a frame, a rear projection type screen attached to a front face of the frame, an optical unit provided on the frame for projecting a television image, and a reflecting mirror attached to the frame for reflecting a television image projection light flux emitted from the optical unit on a rear face of the rear projection type screen. The optical unit includes a discharge lamp disposed in a horizontal direction and a UV-IR cut filter disposed in front of the discharge lamp. The discharge lamp includes a lamp bulb, and a lamp reflector having a reflecting face disposed around the lamp bulb for reflecting light emitted from the lamp bulb and emitting the reflected light in the forward direction. Ultraviolet rays and infrared rays included in the light emitted from the lamp bulb and reflected and emitted in the forward direction by and from the reflecting face are reflected in a rather downward direction toward the reflecting face by means of the UV-IR cut filter.

In summary, light emitted from the lamp bulb and reflected at a comparatively high temperature portion of the reflecting face of the lamp reflector is reflected by an IR cut filter or a UV-IR cut filter so that it is illuminated toward a comparatively low temperature portion of the reflecting face or it escapes to the outer side of the reflecting face. Consequently, the light reflected by the IR cut filter or UV-IR cut filter is not returned to the comparatively high temperature portion of the reflecting face, and the temperature difference between upper and lower portions of the lamp bulb is reduced thereby.

Embodiments of the invention relate to a method of reducing the temperature difference between upper and lower portions of a lamp bulb for elongating the life of a discharge lamp used in an optical apparatus such as a projector, an optical unit, a projection type display apparatus and a projection television apparatus.

Embodiments of the invention relate to a method of reducing the temperature difference between portions of a lamp bulb.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
FIG. 1 is a schematic view of a projection type display apparatus according to an embodiment of the present invention;
FIG. 2 is a perspective view of a discharge lamp used in the projection type display apparatus of FIG. 1;
FIG. 3A is a sectional view of an attaching structure for a UV-IR cut filter and the discharge lamp of the projection type display apparatus of FIG. 1 and FIG. 3B is a perspective view of the attaching structure for the UV-IR cut filter shown in FIG. 3A;
FIG. 4A is a schematic view of the discharge lamp and the UV-IR cut filter relates to the embodiment of the present invention, and FIG. 4B is sectional view of the UV-IR cut filter;
FIG. 5 is a schematic view showing loci of upper and lower side reflected light fluxes where the UV-IR cut filter 21 is inclined by -4°;
FIG. 6 is a similar view but showing loci of upper and lower side reflected light fluxes where the UV-IR cut filter 21 is inclined by 4°;
FIGS. 7A, 7B and 7C are schematic views illustrating different methods of reversing the UV-IR cut filter;
FIG. 8A is a schematic view showing another projection type display apparatus to which the present invention is applied, and FIG. 8B is a similar view but showing a modification to the projection type display apparatus of FIG. 8A;
FIG. 9A is a schematic view showing a further projection type display apparatus to which the present invention is applied, and FIG. 9B is a similar view but showing a modification to the projection type display apparatus of FIG. 9A;
FIGS. 10A and 10B are a front elevational view and a side elevational view, respectively, of a projection television apparatus; and
FIG. 11 is a schematic view showing a configuration of a conventional projector.

### First Embodiment

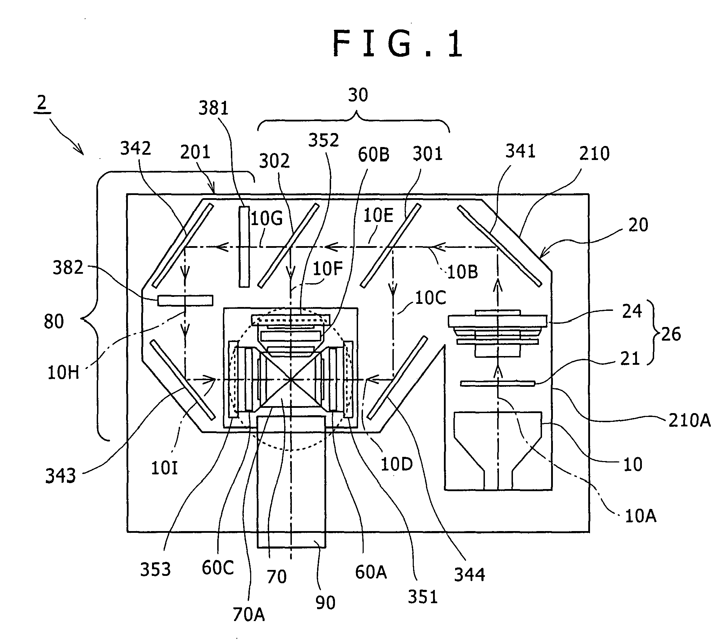

Referring first to FIG. 1, there is shown a projection type display apparatus to which the present invention is applied. The projection type display apparatus 2 shown includes an outer housing 201, a projection lens 90, and an optical unit 20 accommodated in the outer housing 201 for projecting an image.

The optical unit 20 includes a discharge lamp 10 which forms a light source for projecting an image, an illuminating optical system 26, a color separating optical system 30, three liquid crystal panels 60A, 60B and 60C each in the form of a transmission type liquid crystal apparatus serving as an optical modulation section (spatial optical modulation element), a cross dichroic prism 70 and a relay optical system 80. The components mentioned of the optical unit 20 are accommodated in a housing 210 of the optical unit 20.

A flux of light emitted from the discharge lamp 10 is introduced by the illuminating optical system 26 to the color separating optical system 30 and the relay optical system 80, by which it is split into three light fluxes of red (R), green (G) and blue (B).

The three light fluxes of the colors are passed through the three liquid crystal panels 60A, 60B and 60C (spatial optical modulation elements) which individually display image information of the three corresponding colors of red (R), green (G) and blue (B), whereupon they are modulated based on the image information. Thereafter, the three light fluxes are synthesized into a single image projection light flux by the cross dichroic prism 70, and the image projection light flux is projected on a screen through the projection lens 90. It is to be noted that the image information is supplied to the liquid crystal panels 60A, 60B and 60C from an external apparatus such as a personal computer not shown through an electric circuit incorporated in the projection type display apparatus 2.

More particularly, the discharge lamp 10 is disposed such that the optical axis thereof is directed horizontally, and the illuminating optical system 26 is disposed in front of the discharge lamp 10.

The illuminating optical system 26 includes a UV-IR cut filter 21 and a PS conversion element 24 disposed on a first light path 10A. After the flux of light from the discharge lamp 10 passes through the UV-IR cut filter 21 and the PS conversion element 24, it is reflected by a reflecting mirror 341 and comes to a second light path 10B of the color separating optical system 30. The first light path 10A and the second light path 10B orthogonally cross with each other.

The color separating optical system 30 includes a dichroic mirror 301 disposed on the second light path 10B and a dichroic mirror 302 disposed on an extension line of the second light path 10B.

The two dichroic mirrors 301 and 302 are disposed such that they make an angle of 45 degrees with respect to the second light path 10B and the extension line of the second light path 10B.

The light flux emitted from the illuminating optical system 26 is reflected by the dichroic mirror 301 and passes through the liquid crystal panel 60A past a reflecting mirror 344 and a condenser lens 351, and then comes to the cross dichroic prism 70. The light path from the dichroic mirror 301 to the reflecting mirror 344 is hereinafter referred to as third light path 10C, and the light path from the reflecting mirror 344 to the cross dichroic prism 70 is hereinafter referred to as fourth light path 10D. In the present embodiment, the second light path 10B and the third light path 10C orthogonally cross with each other, and also the third light path 10C and the fourth light path 10D orthogonally cross with each other.

That portion of the light flax passing through the dichroic mirror 301 which is reflected by the dichroic mirror 302 passes through the liquid crystal panel 60B past a condenser lens 352 and comes to the cross dichroic prism 70. The light path from the dichroic mirror 301 to the dichroic mirror 302 is hereinafter referred to as fifth light path 10E, and the light path from the dichroic mirror 302 to the cross dichroic prism 70 is hereinafter referred to as sixth light path 10F. In the present embodiment, the second light path 10B and the fifth light path 10E are disposed coaxially, and the fifth light path 10E and the sixth light path 10F orthogonally cross with each other.

The light flux passing through the dichroic mirror 301 and then passing through the dichroic mirror 302 successively passes a relay lens 381, a reflecting mirror 342, another relay lens 382 and a reflecting mirror 343 which form the relay optical system 80 and further passes through the liquid crystal panel 60C past a condenser lens 353, and then comes to the cross dichroic prism 70. The light path from the dichroic mirror 302 to the reflecting mirror 342 is hereinafter referred to as seventh light path 10G, and the light path from the reflecting mirror 342 to the reflecting mirror 343 is hereinafter referred to as eighth light path 10H. Further, the light path from the reflecting mirror 343 to the cross dichroic prism 70 is hereinafter referred to as ninth light path 10I. In the present embodiment, the seventh light path 10G and the eighth light path 10H orthogonally cross with each other, and also the eighth light path 10H and the ninth light path 10I orthogonally cross with each other.

A light flux emitted from an outgoing face 70A of the cross dichroic prism 70 comes into the projection lens 90. Then, a color image is formed on a screen through the projection lens 90.

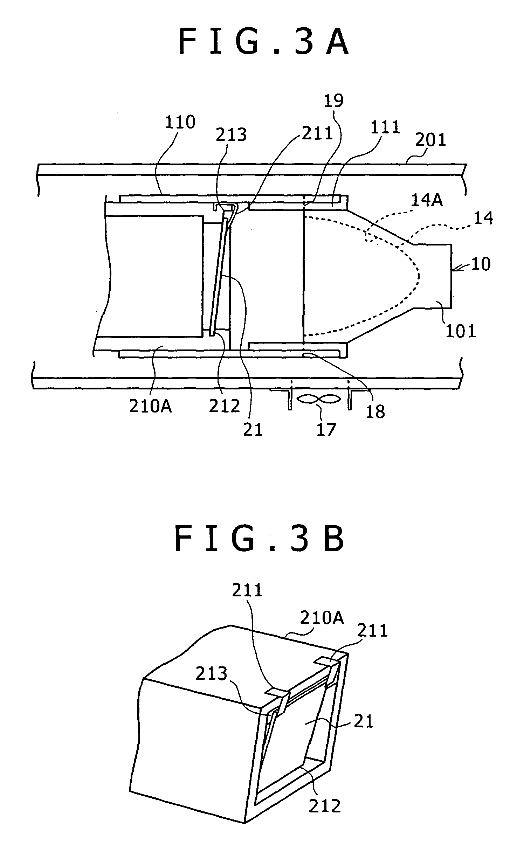

The UV-IR cut filter 21 is disposed in an inclined relationship at an end portion 210A of the housing 210 in front of the discharge lamp 10 as seen in FIGS. 3A and 3B.

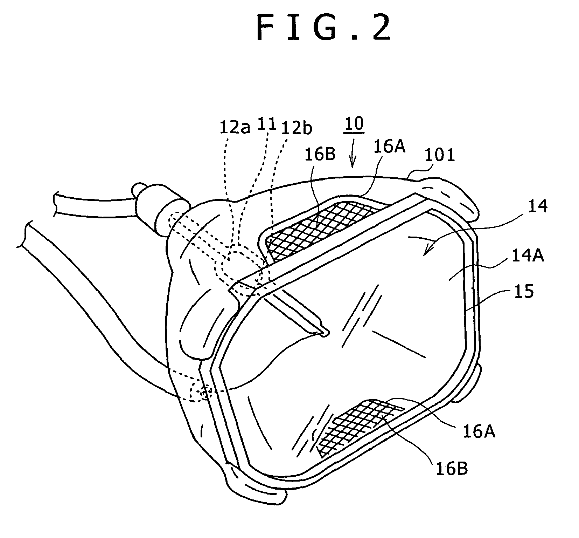

The discharge lamp 10 includes a lamp housing 101, a lamp reflector 14, a lamp bulb 11 and a protective glass plate 15 as seen in FIG. 2.

The lamp housing 101 has a rectangular opening at a front end thereof, and the lamp reflector 14 is provided in the inside of the lamp housing 101. A pair of cutaway portions 16A for allowing cooling air to pass therethrough are provided at upper and lower portions of a front portion of the lamp housing 101 and the lamp reflector 14, and a protective net 16B is provided in each of the cutaway portions 16A.

The lamp reflector 14 has a reflecting face 14A provided on an inner face thereof and forming a rotational symmetrical paraboloid.

The lamp bulb 11 has a pair of discharge electrodes 12a and 12b located in an opposing relationship to each other at places corresponding to the focus of the rotational symmetrical paraboloid on a rotational symmetrical axis of the reflecting face 14A.

The lamp bulb 11 is disposed such that a rear portion thereof extends through a rear end of the lamp housing 101.

The protective glass plate 15 is provided so as to close up the opening at the front end of the lamp housing 101.

Accordingly, light emitted by discharge between the discharge electrodes 12a and 12b is converted into parallel light by the reflecting face 14A and is reflected forwardly through the protective glass plate 15.

Now, attachment of the discharge lamp is described.

Referring to FIGS. 3A and 3B, an end portion 210A of the housing 210 in which the UV-IR cut filter 21 is accommodated has a cross section having a shape of a rectangular framework, and a housing side framework member 110 having a cross section having a shape of rectangular framework is attached to the base end of the end portion 210A.

Meanwhile, a lamp side framework member 111 having a cross section having a shape of a rectangular framework is attached to a front portion of the lamp housing 101. The lamp side framework member 111 is inserted in the inside of the housing side framework member 110, and the framework members 110 and 111 are secured to each other by screws.

Accordingly, the discharge lamp 10 is supported by the housing 210 through the lamp side framework member 111 and the housing side framework member 110.

Openings 18 and 19 are provided at a location of the lamp side framework member 111 and a location of the housing side framework member 110 corresponding to the upper and lower cutaway portions 16A, and an air blowing fan 17 is provided in an opposing relationship to the lower side opening 18. Thus, external air is fed into the discharge lamp 10 through the opening 18 on the lower side and the cutaway portion 16A on the lower side by the air blowing fan 17 to cool the lamp bulb 11 and the lamp reflector 14. Then, the air is discharged to the outside of the discharge lamp 10 through the cutaway portion 16A on the upper side and the opening 19 on the upper side. Consequently, the lamp bulb 11 is cooled, and the difference in temperature between the upper and lower portions of the lamp bulb 11 is reduced.

It is to be noted that, since the average temperature between the upper and lower portions with respect to the lamp bulb varies depending upon the blown amount of air, voltage setting to the air blowing fan 17 is controlled so that the temperature difference between the upper and lower portions with respect to the lamp bulb 11 may be minimized.

Now, attachment of the UV-IR cut filter 21 is described.

A groove 212 is formed at a lower portion of an inner face of the end portion 210A of the housing 210 such that the lower end of the UV-IR cut filter 21 is accommodated therein. Meanwhile, an inclined face 213 is formed at an upper portion of the inner face of the end portion 210A such that it is engageable with the upper end of the UV-IR cut filter 21.

The UV-IR cut filter 21 is disposed such that it is accommodated at the lower end thereof in the groove 212 and held down at the upper end thereof to the inclined face 213 by leaf springs 211. The leaf springs 211 are assembled to an upper wall of the end portion 210A.

The UV-IR cut filter 21 is disposed in a downwardly inclined relationship such that an upper portion of the UV-IR cut filter 21 is nearer to the discharge lamp 10 than a lower portion of the UV-IR cut filter 21 so that infrared rays and ultraviolet rays included in reflected light of light emitted from the lamp bulb 11 and reflected forwardly by the reflecting face 14A are reflected rather downwardly toward the reflecting face 14A.

Since the disposition of the W-IR cut filter 21 in a rather downwardly inclined relationship presents significant advantages of the present embodiment, details of the same are described below.

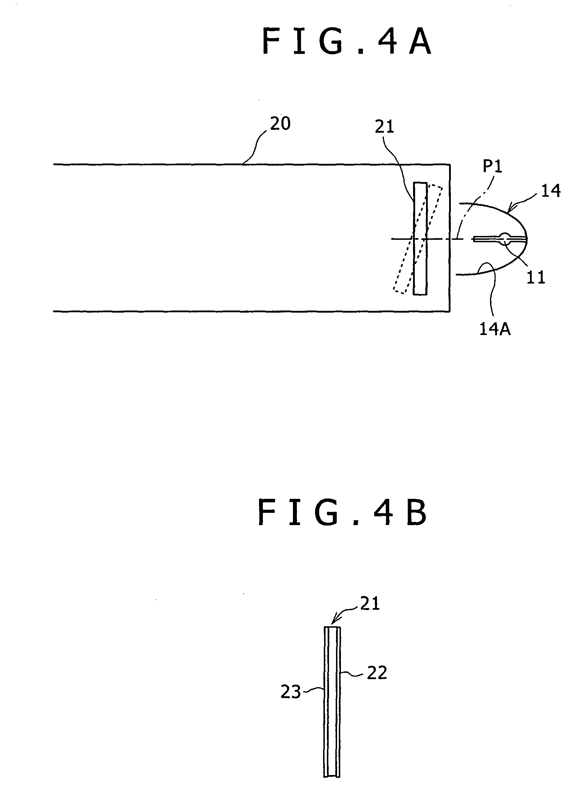

Referring to FIGS. 4A and 4B, the UV-IR cut filter 21 disposed in front of the discharge lamp 10 has a UV-IR cut film 22 provided on a light incoming face thereof for cutting ultraviolet rays and infrared rays by reflection. Further, the UV-IR cut filter 21 has an AR film 23 applied to a light outgoing face thereof for suppressing reflection of stray light from the optical unit 20.

Emitted light from the lamp bulb 11 is converted into a parallel flux of light by the reflecting face 14A and comes to the UV-IR cut filter 21. UV-IR light (ultraviolet rays and infrared rays) included in the incoming light to the UV-IR cut filter 21 is reflected by the UV-IR cut film 22 toward the reflecting face 14A, by which it is reflected again. Here, the UV-IR cut filter 21 is disposed in an inclined relationship by a small amount in a downward direction such that an upper portion of the UV-IR cut filter 21 is nearer to an upper portion of the reflecting face 14A (the downward direction is hereinafter referred to as - direction) or in an upward direction such that an upper portion of the UV-IR cut filter 21 is spaced away from an upper portion of the reflecting face 14A (the direction is hereinafter referred to as + direction) so that the UV-IR light reflected by the UV-IR cut filter 21 comes in a rather downward direction or in a rather upward direction to the reflecting face 14A. Consequently, the UV-IR light reflected by the lamp reflector 14 comes to upper and lower portions of the lamp bulb 11 with different incoming light amounts from each other, and consequently, the temperature of the upper portion or the lower portion changes.

The inclination angle of the UV-IR cut filter 21 is most preferable when the temperature difference between the upper and lower portions of the lamp bulb 11 is minimum, and in the present embodiment, the inclination angle is set fixedly to -4°.

The following experiments were conducted in order to confirm an effect where the inclination angle of the UV-IR cut filter 21 is varied.

### Experiment 1

### Experiment conditions:

Discharge lamp: 190 W ultra-high pressure mercury lamp
Air gap of lamp reflector: 10 mm x 10 mm
Voltage to fan for blowing in air through air gap: 5.5 V
Experiments wherein, with the angle perpendicular to the optical axis of the UV-IR cut filter 21 set as a reference angle (0°), the inclination angle of the UV-IR cut filter 21 was set to 1) 4°, 2) 0° and 3) -4° and 4) no filter was used were conducted successively, and the temperatures of an upper portion and a lower portion of the lamp bulb 11 were measured to determine the temperature difference between the upper and lower portion of the lamp bulb 11. Results of the experiments are listed in Table 1 below:

**Table 1**

| | Inclination angle of UV-IR cut filter | Temp. of bulb upper portion | Temp. of bulb lower portion | Temp. difference |
|---|---|---|---|---|
| 1 | 4° | 860°C | 800°C | 60°C |
| 2 | 0° | 850°C | 820°C | 30°C |
| 3 | -4° | 840°C | 840°C | 0°C |
| 4 | No UV-IR cut filter | 820°C | 760°C | 60°C |

According to the experiments described above, by setting the UV-IR cut filter 21 so as to have an inclination angle of -4° from the reference inclination angle 0°, the temperature difference between the upper and lower portions of the lamp bulb 11 reduced from 30°C to 0°C.

### Experiment 2

Experiment conditions:
Discharge lamp: 150 W ultra-high pressure mercury lamp
Other conditions: same as those in the Experiment 1
Experiments wherein the inclination angle of the UV-IR cut filter 21 was set to 1) 4°, 2) 0° and 3) -4° and 4) no filter was used were conducted successively similarly as in the Experiment 1 above to determine the temperature difference between the upper and lower portion of the lamp bulb 11. As a result, by setting the UV-IR cut filter 21 so as to be inclined to -4° from the reference inclination angle 0°, the temperature difference between the upper and lower portions of the lamp bulb 11 reduced from 95°C to 35°C.

From the experiments described above, it has been confirmed successfully that the temperature difference of the lamp bulb 11 can be reduced by the inclination angle of the W-IR cut filter 21 utilizing reflected light of the UV-IR cut filter 21.

Now, the reason why the temperature difference between upper and lower portions of the lamp bulb 11 varies depending upon the inclination angle of the UV-IR cut filter 21 is described.

Light emitted from the lamp bulb 11 and coming to and reflected forwardly by an upper portion of the reflecting face 14A is then reflected by the UV-IR cut filter 21 and comes to a lower portion of the reflecting face 14A or is illuminated to the outer side below the reflecting face 14A without returning to the upper portion of the reflecting face 14A. Accordingly, the temperature of the upper portion of the reflecting face 14A becomes lower when compared with that in the conventional arrangement and simultaneously the temperature of the lower portion of the reflecting face 14A becomes higher than that in the conventional arrangement.

More detailed description is given below.

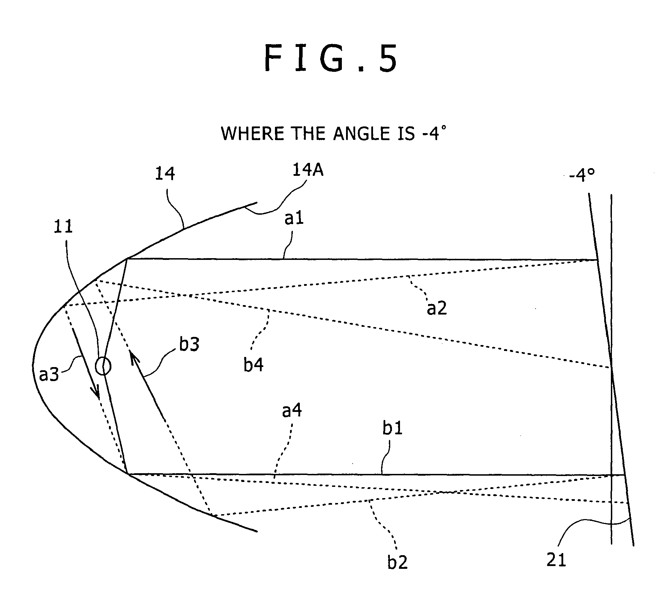

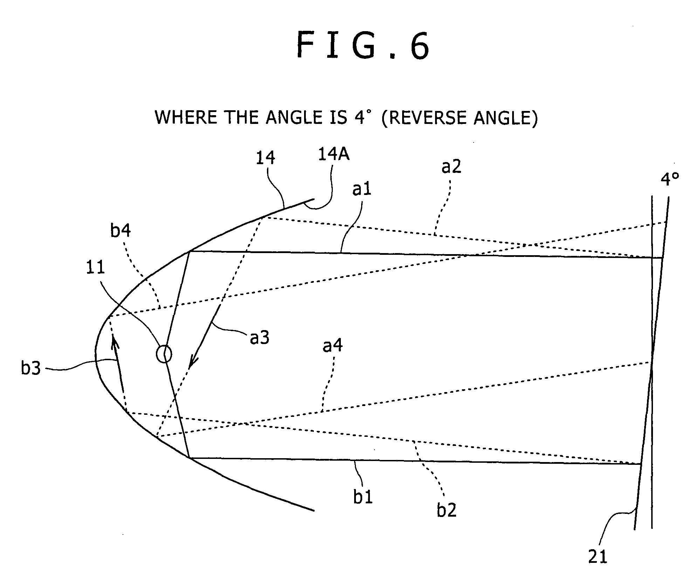

Illumination optical system designing and evaluation software Odis Ver. 70 was used to perform light flux tracing of returning light from the UV-IR cut filter 21 under the conditions that the UV-IR cut filter 21 was 1) inclined by -4° and 2) inclined by 4°. Light loci obtained are illustrated in FIGS. 5 and 6.

As seen in FIG. 5, where the UV-IR cut filter 21 is inclined by -4°, upper and lower side outgoing light fluxes a1 and b1 emitted from the lamp bulb 11 through the reflecting face 14A are reflected by the UV-IR cut filter 21 inclined by -4° and make rather downwardly inclined filter reflected light beams a2 and b2, respectively. The filter reflected light beams a2 and b2 are further reflected by the reflecting face 14A again to make reflector reflected light fluxes a3 and b3, respectively. The reflector reflected light fluxes a3 and b3 are further reflected by the reflecting face 14A to make reflector reflected light fluxes a4 and b4 and individually escape downwardly as seen in FIG. 5. Consequently, it is considered that a lower portion of the lamp bulb 11 is warmed while the temperature does not stay at the upper portion of the lamp bulb 11, and as a result, the temperature difference between the upper and lower portions of the lamp bulb 11 decreases.

In contrast, where the UV-IR cut filter 21 is inclined by 4°, upper and lower side outgoing light fluxes a1 and b1 emitted from the lamp bulb 11 through the reflecting face 14A are reflected by the UV-IR cut filter 21 inclined by 4° and make rather upwardly inclined filter reflected light beams a2 and b2, respectively, as seen in FIG. 6. The filter reflected light beams a2 and b2 are further reflected by the reflecting face 14A again to make reflector reflected light fluxes a3 and b3, respectively. The reflector reflected light fluxes a3 and b3 are further reflected by the reflecting face 14A to make reflector reflected light fluxes a4 and b4 and individually escape upwardly as seen in FIG. 6. Consequently, it is considered that an upper portion of the lamp bulb 11 is warmed thereby to increase the temperature difference between the upper and lower portions of the lamp bulb 11.

Therefore, according to the present embodiment, the temperature difference between upper and lower portions of the lamp bulb can be reduced only by disposing the UV-IR cut fitter in an inclined relationship without the necessity for any special apparatus, and consequently, the life of the discharge lamp can be elongated.

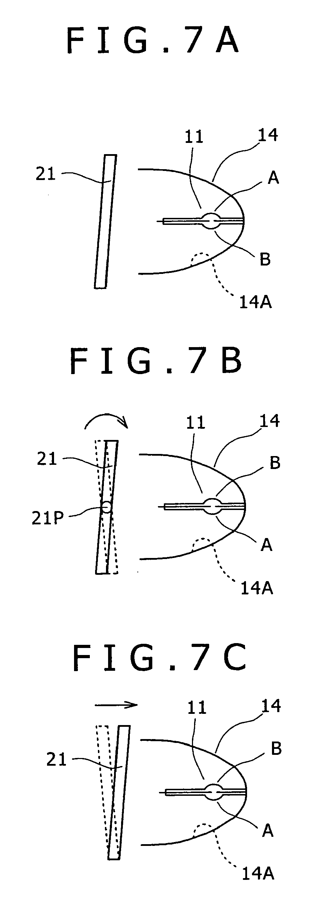

The projection type display apparatus may be used in both of two manners of use including use as a stationarily placed apparatus and use as a suspended apparatus. When compared with a case wherein the projection type display apparatus is used as a stationarily placed apparatus as seen in FIG. 7A, where the projection type display apparatus is used as a suspended apparatus as seen in FIG. 7B or 7C, an upper portion A and a lower portion B of the lamp bulb are reversed vertically, and therefore, also it is necessary to reverse the inclination angle of the UV-IR cut filter 21. As a mechanism for reversing the inclination angle of the UV-IR cut filter 21, a pivoting mechanism may be provided which pivots around pivots 21P provided at left and right end faces of the UV-IR cut filter 21 as seen in FIG. 7B. Alternatively, a displacement mechanism for displacing one of the upper and lower ends of the UV-IR cut filter 21 around the other one of the upper and lower ends as seen in FIG. 7C may be provided.

### Second Embodiment

Now, a second embodiment of the present invention is described.

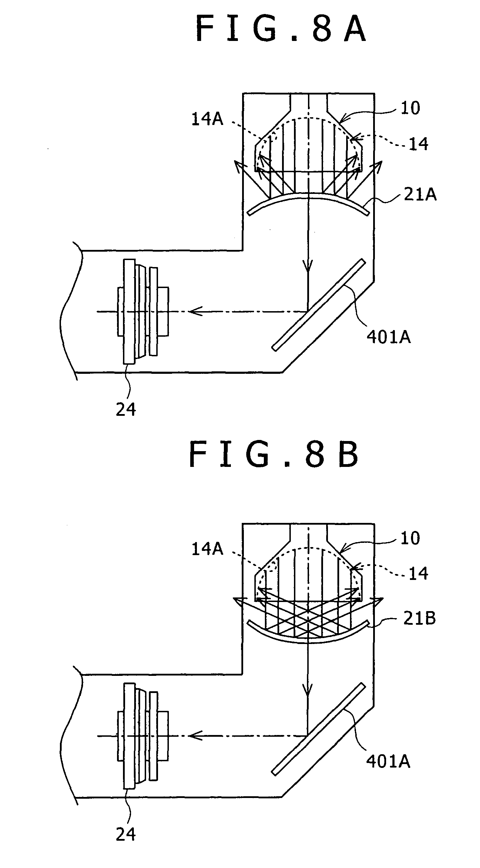

FIG. 8A shows part of a projection type display apparatus according to the second embodiment.

The second embodiment is similar to the first embodiment except that the discharge lamp 10 is directed downwardly and that a reflecting mirror 401A is disposed between the discharge lamp 10 and the PS conversion element 24.

The discharge lamp 10 is disposed in a downward direction, and a UV-IR cut filter 21A is disposed below the discharge lamp 10.

The discharge lamp 10 has a configuration similar to that in the first embodiment. Consequently, light emitted from the lamp bulb 11 is converted into and reflected downwardly as parallel light by the reflecting face 14A and introduced to the UV-IR cut filter 21A. The light passing through the UV-IR cut filter 21A is reflected by the reflecting mirror 401A and introduced to the PS conversion element 24.

In the present embodiment, the UV-IR cut filter 21A, or more particularly the UV-IR cut film 22, is formed so as to have a curved face convex in the upward direction as seen in FIG. 8A.

In the second embodiment, light emitted from the discharge electrodes 12a and 12b and introduced to and reflected downwardly by the reflecting face 14A is then reflected toward an outer circumference of the reflecting face 14A by the convex curved face of the UV-IR cut filter 21A.

Accordingly, reflected light reflected by the UV-IR cut filter 21A does not return to the upper portion of the reflecting face 14A but comes to a lower portion of the reflecting face 14A. Therefore, the temperature of an upper portion of the reflecting face 14A drops when compared with that of the conventional arrangement, and the temperature difference between an upper portion and a lower portion of the lamp bulb can be reduced and consequently the life of the discharge lamp can be elongated.

A modification to the second embodiment is shown in FIG. 8B.

Referring to FIG. 8B, in the modification, a UV-IR cut filter 21B, more particularly the UV-IR cut film 22, is formed from, for example, a curved face convex downwardly.

In the present modification, light emitted from the discharge electrodes 12a and 12b and coming to and reflected by the reflecting face 14A is reflected toward an outer periphery of the reflecting face 14A by the convex curved face of the UV-IR cut filter 21B.

Accordingly, reflected light reflected by the UV-IR cut filter 21B comes to a lower portion of the reflecting face 14A without returning to the upper portion of the reflecting face 14A. Therefore, the temperature of an upper portion of the reflecting face 14A drops when compared with that of the conventional arrangement, and the temperature difference between an upper portion and a lower portion of the lamp bulb can be reduced and consequently the life of the discharge lamp can be elongated.

It is to be noted that a similar effect is exhibited also where the second embodiment is modified such that the UV-IR cut filter 21A is formed from a conical face convex upwardly in place of the upwardly convex curved face shown in FIG. 8A or the UV-IR cut filter 21B is formed from a conical face convex downwardly in place of the downwardly convex curved face shown in FIG. 8B.

### Third Embodiment

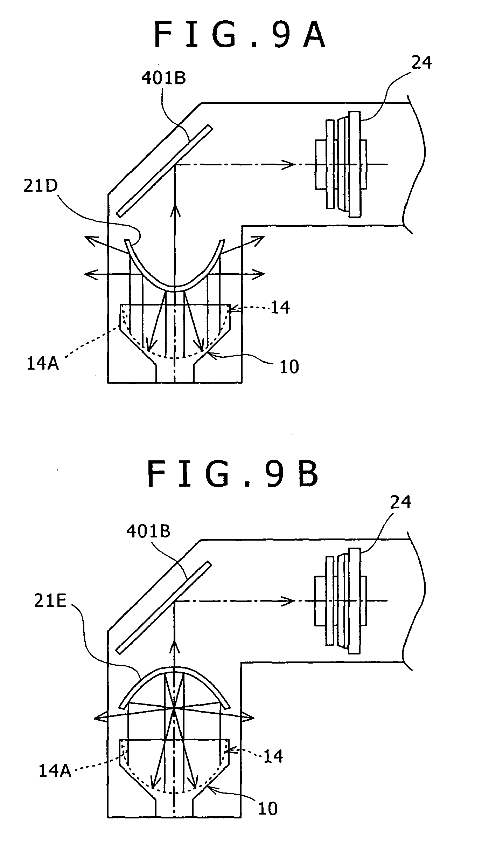

FIG. 9A shows part of a projection type display apparatus according to a third embodiment of the present invention.

The third embodiment is similar to the first embodiment except that the discharge lamp 10 is disposed in an upward direction and that the a reflecting mirror 401B is disposed between the discharge lamp 10 and the PS conversion element 24.

The discharge lamp 10 is disposed in an upward direction, and a UV-IR cut filter 21D is disposed above the discharge lamp 10.

The discharge lamp 10 has a configuration similar to that in the first embodiment. Consequently, light emitted from the lamp bulb 11 is converted into and reflected upwardly as parallel light by the reflecting face 14A and introduced to the UV-IR cut filter 21D. The light passing through the UV-IR cut filter 21D is reflected by the reflecting mirror 401B and introduced to the PS conversion element 24.

In the present embodiment, the UV-IR cut filter 21D, or more particularly the UV-IR cut film 22, is formed so as to have a curved face convex in the downward direction as seen in FIG. 9A. In this instance, the inclined face of the curved face of the UV-IR cut filter 21D preferably has a slope steeper than that of the UV-IR cut filter 21A in the second embodiment.

In the third embodiment, light emitted from the discharge electrodes 12a and 12b and introduced to and reflected upwardly by the reflecting face 14A is reflected toward an outer circumference of the reflecting face 14A by the UV-IR cut filter 21D. Meanwhile, light reflected from an upper portion of the reflecting face 14A is reflected by the convex curved face of the UV-IR cut filter 21D so as to escape to the outside of the lamp reflector 14 without returning to the upper portion of the reflecting face 14A.

Therefore, the temperature of an upper portion of the reflecting face 14A drops when compared with that of the conventional arrangement, and the temperature difference between an upper portion and a lower portion of the lamp bulb can be reduced and besides the life of the discharge lamp can be elongated similarly as in the first embodiment.

A modification to the third embodiment is shown in FIG. 9B.

Referring to FIG. 9B, in the modification, a UV-IR cut filter 21E, more particularly the UV-IR cut film 22, is formed from, for example, a curved face convex upwardly. In this instance, the inclined face of the curved face of the UV-IR cut filter 21E preferably has a slope steeper than that of the UV-IR cut filter 21B in the second embodiment.

In the present modification, light emitted from the discharge electrodes 12a and 12b and coming to and reflected by the reflecting face 14A is reflected toward an outer periphery of the reflecting face 14A by the convex curved face of the UV-IR cut filter 21E. Accordingly, the light reflected from an upper portion of the reflecting face 14A is reflected so as to escape to the outside of the lamp reflector 14.

Therefore, the temperature of an upper portion of the reflecting face 14A drops when compared with that of the conventional arrangement, and the temperature difference between an upper portion and a lower portion of the lamp bulb can be reduced and consequently the life of the discharge lamp can be elongated.

It is to be noted that a similar effect is exhibited also where the third embodiment is modified such that the UV-IR cut filter 21D is formed from a conical face convex downwardly in place of the downwardly convex curved face shown in FIG. 9A or the UV-IR cut filter 21E is formed from a conical face convex upwardly in place of the upwardly convex curved face shown in FIG. 9B.

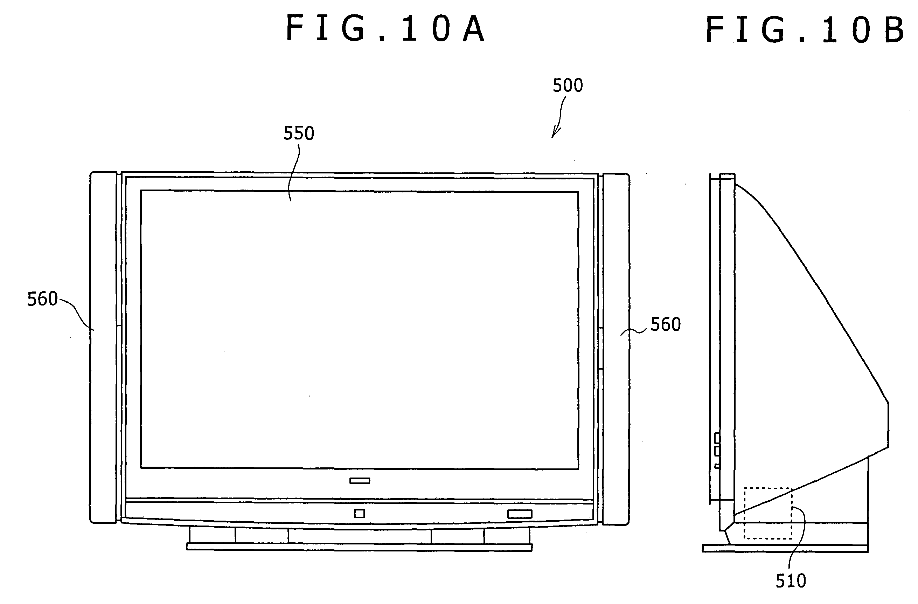

The optical units of the first to third embodiments described hereinabove can be applied, for example, also to a projection television apparatus 500 shown in FIGS. 10A and 10B.

In the following, the projection television apparatus 500 is described.

Referring to FIGS. 10A and 10B, the projection television apparatus 500 includes a frame in the inside thereof, and an optical unit 510 for projection of a television image, a reflecting mirror (not shown), and a rear projection type screen 550.

The projection television apparatus 500 further includes an image information production circuit which decodes a received television signal into an image signal and a sound signal, performs a necessary signal process for the image signal to produce image information of the three primary colors of red (R), green (G) and blue (B) and supplies the image signals to the optical unit 510.

The optical unit 510 is configured similarly to the projection type display apparatus 2 in the first embodiment and emits, when the image information is supplied to liquid crystal panels corresponding to red (R), green (G) and blue (B), a television image projection light flux.

The reflecting mirror is disposed above the optical unit 510 in the rear of the rear projection type screen 550 of the rear projection type and reflects the television image projection light flux emitted from the optical unit 510 toward the rear face of the rear projection type screen 550. The rear projection type screen 550 displays a television image in the front face by projecting the television image projection light flux reflected by the reflecting mirror on the rear face.

The rear projection type screen 550 is formed from, for example, a Fresnel lens disposed on the image source side, and a lenticular screen disposed at the next stage to the Fresnel lens. Another screen may be provided additionally in order to reduce degradation of the contrast by external light and protect the lenticular screen.

The present invention can be applied also to an IR filter or a UV-IR filter disposed in an opposing relationship to the discharge lamp of the optical unit of the projection television apparatus 500 having such a configuration as described above.

It is to be noted that, while, in the embodiments described above, the UV-IR cut filter 21 is disposed in an opposing relationship to the lamp bulb 11, also where an IR cut filter is used in place of the UV-IR cut filter 21, the temperature difference between upper and lower portions of the lamp bulb can naturally be reduced by reflecting light emitted from a lamp bulb and reflected at a comparatively high temperature portion of a reflecting face by means of the IR cut filter so as to illuminate IR light (infrared rays) toward a comparatively low temperature portion of the reflecting face or to direct the IR light to escape to the outside of the reflecting face.

Further, while, in the embodiments described hereinabove, a liquid crystal panel formed from a transmission type liquid crystal apparatus is used as the light modulation section (spatial optical modulation element) which modulates a flux of light based on image information in the optical unit, such an optical spatial modulation element may be any element which modulates a flux of light based on image information. Thus, for example, a liquid crystal panel formed from a reflection type liquid crystal apparatus may be used, or an element called DLM (Digital Micromirror Device) which includes very small mirrors corresponding to individual pixels to reflect a flux of light may be used. It is to be noted that the DLM is used widely in projection type display apparatus and rear projection television apparatus of the DLP (Digital Light Processing) system.

Further, in embodiments, the discharge lamp disposed in a horizontal direction is not limited to that which is directed only in the strictly horizontal direction, but may naturally include a discharge lamp which is directed in a rather inclined relationship to an upper or lower direction from the horizontal direction.

Embodiments provide a method and apparatus which minimizes the temperature difference between upper and lower portions of a lamp bulb in an optical unit. A UV-IR cut filter is disposed in a downwardly inclined relationship such that an upper portion thereof is nearer to a discharge lamp than a lower portion thereof so that infrared rays and ultraviolet rays included in light emitted from a lamp bulb and reflected in a forward direction from an upper portion of a reflecting face are reflected toward a lower portion of the reflecting face. As the reflected light from the UV-IR cut filter is illuminated on the lower portion of the reflecting face, the temperature difference between upper and lower portions of the lamp bulb is reduced.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A method of reducing the temperature difference between upper and lower portions of a lamp bulb of a discharge lamp disposed in a horizontal direction in an apparatus which includes, in addition to said discharge lamp, an IR cut filter disposed in front of said discharge lamp, said discharge lamp including, in addition to said lump bulb, a lamp reflector having a reflecting face disposed around said lamp bulb for reflecting light emitted from said lamp bulb and emitting the reflected light in the forward direction, said method comprising:
a step of reflecting infrared rays included in the light emitted from said lamp bulb and reflected and emitted in the forward direction by and from said reflecting face in a rather downward direction toward said reflecting face by means of said IR cut filter.

2. A method of reducing the temperature difference between upper and lower portions of a lamp bulb according to claim 1, wherein said IR cut filter is provided in such a manner as to extend on a plane and disposed in an inclined relationship such that an upper portion thereof is nearer to said discharge lamp than a lower portion thereof.

3. A method of reducing the temperature difference between upper and lower portions of a lamp bulb according to claim 1, wherein said reflecting face is formed from a rotational symmetrical paraboloid, and said lamp bulb has a discharge electrode for emitting light, which is disposed at a focus on a rotational symmetrical axis of the rotational symmetrical paraboloid.

4. A method of reducing the temperature difference between upper and lower portions of a lamp bulb according to claim 1, wherein said lamp reflector has a cutaway portion formed therein for allowing cooling air to be admitted in so that said lamp bulb is cooled by the cooling air.

5. A method of reducing the temperature difference between upper and lower portions of a lamp bulb of a discharge lamp disposed in a downward direction in an apparatus which includes, in addition to said discharge lamp, an IR cut filter disposed in lower side of said discharge lamp, said discharge lamp including, in addition to said lump bulb, a lamp reflector having a reflecting face disposed around said lamp bulb for reflecting light emitted from said lamp bulb and emitting the reflected light in the downward direction, said method comprising:
a step of reflecting infrared rays included in the light emitted from said lamp bulb and reflected and emitted in the downward direction by and from said reflecting face in a direction toward an outer circumference of said reflecting face by means of said IR cut filter.

6. A method of reducing the temperature difference between upper and lower portions of a lamp bulb according to claim 5, wherein said reflecting face of said IR cut filter is formed as a curved face or a conical face convex in the downward or upward direction.

7. A method of reducing the temperature difference between upper and lower portions of a lamp bulb according to claim 5, wherein said reflecting face is formed from a rotational symmetrical paraboloid, and said lamp bulb has a discharge electrode for emitting light, which is disposed at a focus on a rotational symmetrical axis of the rotational symmetrical paraboloid.

8. A method of reducing the temperature difference between upper and lower portions of a lamp bulb according to claim 5, wherein said lamp reflector has a cutaway portion formed therein for allowing cooling air to be admitted in so that said lamp bulb is cooled by the cooling air.

9. A method of reducing the temperature difference between upper and lower portions of a lamp bulb of a discharge lamp disposed in an upward direction in an apparatus which includes, in addition to said discharge lamp, an IR cut filter disposed in upper side of said discharge lamp, said discharge lamp including, in addition to said lump bulb, a lamp reflector having a reflecting face disposed around said lamp bulb for reflecting light emitted from said lamp bulb and emitting the reflected light in the upward direction, said method comprising:
a step of reflecting infrared rays included in the light emitted from said lamp bulb and reflected and emitted in the upward direction by and from said reflecting face in a direction toward an outer circumference of said reflecting face by means of said IR cut filter.

10. A method of reducing the temperature difference between upper and lower portions of a lamp bulb according to claim 9, wherein said reflecting face of said IR cut filter is formed as a curved face or a conical face convex in the downward or upward direction.

11. A method of reducing the temperature difference between upper and lower portions of a lamp bulb according to claim 9, wherein said reflecting face is formed from a rotational symmetrical paraboloid, and said lamp bulb has a discharge electrode for emitting light, which is disposed at a focus on a rotational symmetrical axis of the rotational symmetrical paraboloid.

12. A method of reducing the temperature difference between upper and lower portions of a lamp bulb according to claim 9, wherein said lamp reflector has a cutaway portion formed therein for allowing cooling air to be admitted in so that said lamp bulb is cooled by the cooling air.

13. A method of reducing the temperature difference between upper and lower portions of a lamp bulb of a discharge lamp disposed in a horizontal direction in an apparatus which includes, in addition to said discharge lamp, a UV-IR cut filter disposed in front of said discharge lamp, said discharge lamp including, in addition to said lump bulb, a lamp reflector having a reflecting face disposed around said lamp bulb for reflecting light emitted from said lamp bulb and emitting the reflected light in the forward direction, said method comprising:
a step of reflecting infrared rays included in the light emitted from said lamp bulb and reflected and emitted in the forward direction by and from said reflecting face in a rather downward direction toward said reflecting face by means of said UV-IR cut filter.

14. A method of reducing the temperature difference between upper and lower portions of a lamp bulb according to claim 13, wherein said UV-IR cut filter is provided in such a manner as to extend on a plane and disposed in an inclined relationship such that an upper portion thereof is nearer to said discharge lamp than a lower portion thereof.

15. A method of reducing the temperature difference between upper and lower portions of a lamp bulb according to claim 13, wherein said reflecting face is formed from a rotational symmetrical paraboloid, and said lamp bulb has a discharge electrode for emitting light, which is disposed at a focus on a rotational symmetrical axis of the rotational symmetrical paraboloid.

16. A method of reducing the temperature difference between upper and lower portions of a lamp bulb according to claim 13, wherein said lamp reflector has a cutaway portion formed therein for allowing cooling air to be admitted in so that said lamp bulb is cooled by the cooling air.

17. A method of reducing the temperature difference between upper and lower portions of a lamp bulb of a discharge lamp disposed in a downward direction in an apparatus which includes, in addition to said discharge lamp, a UV-IR cut filter disposed in lower side of said discharge lamp, said discharge lamp including, in addition to said lump bulb, a lamp reflector having a reflecting face disposed around said lamp bulb for reflecting light emitted from said lamp bulb and emitting the reflected light in the downward direction, said method comprising:
a step of reflecting infrared rays included in the light emitted from said lamp bulb and reflected and emitted in the downward direction by and from said reflecting face in a direction toward an outer circumference of said reflecting face by means of said UV-IR cut filter.

18. A method of reducing the temperature difference between upper and lower portions of a lamp bulb according to claim 17, wherein said reflecting face of said UV-IR cut filter is formed as a curved face or a conical face convex in the downward or upward direction.

19. A method of reducing the temperature difference between upper and lower portions of a lamp bulb according to claim 17, wherein said reflecting face is formed from a rotational symmetrical paraboloid, and said lamp bulb has a discharge electrode for emitting light, which is disposed at a focus on a rotational symmetrical axis of the rotational symmetrical paraboloid.

20. A method of reducing the temperature difference between upper and lower portions of a lamp bulb according to claim 17, wherein said lamp reflector has a cutaway portion formed therein for allowing cooling air to be admitted in so that said lamp bulb is cooled by the cooling air.

21. A method of reducing the temperature difference between upper and lower portions of a lamp bulb of a discharge lamp disposed in an upward direction in an apparatus which includes, in addition to said discharge lamp, a UV-IR cut filter disposed in upper side of said discharge lamp, said discharge lamp including, in addition to said lump bulb, a lamp reflector having a reflecting face disposed around said lamp bulb for reflecting light emitted from said lamp bulb and emitting the reflected light in the upward direction, said method comprising:
a step of reflecting infrared rays included in the light emitted from said lamp bulb and reflected and emitted in the upward direction by and from said reflecting face in a direction toward an outer circumference of said reflecting face by means of said UV-IR cut filter.

22. A method of reducing the temperature difference between upper and lower portions of a lamp bulb according to claim 21, wherein said reflecting face of said UV-IR cut filter is formed as a curved face or a conical face convex in the downward or upward direction.

23. A method of reducing the temperature difference between upper and lower portions of a lamp bulb according to claim 21, wherein said reflecting face is formed from a rotational symmetrical paraboloid, and said lamp bulb has a discharge electrode for emitting light, which is disposed at a focus on a rotational symmetrical axis of the rotational symmetrical paraboloid.

24. A method of reducing the temperature difference between upper and lower portions of a lamp bulb according to claim 21, wherein said lamp reflector has a cutaway portion formed therein for allowing cooling air to be admitted in so that said lamp bulb is cooled by the cooling air.

25. An optical unit, comprising:
a discharge lamp disposed in a horizontal direction for projecting an image; and
an IR cut filter disposed in front of said discharge lamp,
said discharge lamp including a lamp bulb, and a lamp reflector having a reflecting face disposed around said lamp bulb for reflecting light emitted from said lamp bulb and emitting the reflected light in the forward direction,
wherein infrared rays included in the light emitted from said lamp bulb and reflected and emitted in the forward direction by and from said reflecting face are reflected in a rather downward direction toward said reflecting face by means of said IR cut filter.

26. An optical unit, comprising:
a discharge lamp disposed in a horizontal direction for projecting an image; and
a UV-IR cut filter disposed in front of said discharge lamp,
said discharge lamp including a lamp bulb, and a lamp reflector having a reflecting face disposed around said lamp bulb for reflecting light emitted from said lamp bulb and emitting the reflected light in the forward direction,
wherein ultraviolet rays and infrared rays included in the light emitted from said lamp bulb and reflected and emitted in the forward direction by and from said reflecting face are reflected in a rather downward direction toward said reflecting face by means of said UV-IR cut filter.

27. A projection type display apparatus, comprising:
an optical unit for projecting an image on a screen,
said optical unit including a discharge lamp disposed in a horizontal direction and an IR cut filter disposed in front of said discharge lamp,
said discharge lamp including a lamp bulb, and a lamp reflector having a reflecting face disposed around said lamp bulb for reflecting light emitted from said lamp bulb and emitting the reflected light in the forward direction,
wherein infrared rays included in the light emitted from said lamp bulb and reflected and emitted in the forward direction by and from said reflecting face are reflected in a rather downward direction toward said reflecting face by means of said IR cut filter.

28. A projection type display apparatus, comprising:
an optical unit for projecting an image on a screen,
said optical unit including a discharge lamp disposed in a horizontal direction and a UV-IR cut filter disposed in front of said discharge lamp,
said discharge lamp including a lamp bulb, and a lamp reflector having a reflecting face disposed around said lamp bulb for reflecting light emitted from said lamp bulb and emitting the reflected light in the forward direction,
wherein ultraviolet rays and infrared rays included in the light emitted from said lamp bulb and reflected and emitted in the forward direction by and from said reflecting face are reflected in a rather downward direction toward said reflecting face by means of said UV-IR cut filter.

29. A projection television apparatus, comprising:
a frame;
a rear projection type screen attached to a front face of said frame;
an optical unit provided on said frame for projecting a television image; and
a reflecting mirror attached to said frame for reflecting a television image projection light flux emitted from said optical unit on a rear face of said rear projection type screen,
said optical unit including a discharge lamp disposed in a horizontal direction and an IR cut filter disposed in front of said discharge lamp,
said discharge lamp including a lamp bulb, and a lamp reflector having a reflecting face disposed around said lamp bulb for reflecting light emitted from said lamp bulb and emitting the reflected light in the forward direction,
wherein infrared rays included in the light emitted from said lamp bulb and reflected and emitted in the forward direction by and from said reflecting face are reflected in a rather downward direction toward said reflecting face by means of said IR cut filter.

30. A projection television apparatus, comprising:
a frame;
a rear projection type screen attached to a front face of said frame;
an optical unit provided on said frame for projecting a television image; and
a reflecting mirror attached to said frame for reflecting a television image projection light flux emitted from said optical unit on a rear face of said rear projection type screen,
said optical unit including a discharge lamp disposed in a horizontal direction and a UV-IR cut filter disposed in front of said discharge lamp,
said discharge lamp including a lamp bulb, and a lamp reflector having a reflecting face disposed around said lamp bulb for reflecting light emitted from said lamp bulb and emitting the reflected light in the forward direction,
wherein ultraviolet rays and infrared rays included in the light emitted from said lamp bulb and reflected and emitted in the forward direction by and from said reflecting face are reflected in a rather downward direction toward said reflecting face by means of said UV-IR cut filter.
